# EUROPÄISCHE PATENTANMELDUNG

(11) **EP 4 414 151 A1**
(43) Veröffentlichungstag der Anmeldung: **14.08.2024**
(21) Anmeldenummer: 24154882.5
(22) Anmeldetag: 31.01.2024
(51) Int. Cl.: B29B 17/02, B29B 9/16, B29B 13/00, F26B 17/14, F26B 23/00

(54) **ANLAGE UND VERFAHREN ZUM AUFBEREITEN VON KUNSTSTOFF-RECYCLINGMATERIAL**

(30) Priorität: 13.02.2023 DE 102023103391
(71) Anmelder: Coperion GmbH, 70469 Stuttgart (DE)
(72) Erfinder: Lang, Klaus Peter, 88339 Bad Waldsee (DE); Stark, Bernhard, 88273 Fronreute (DE)
(74) Vertreter: Ege Lee & Roider Patentanwälte

(57) **Zusammenfassung**

Aufbereitungsanlage (100) zum Aufbereiten von Kunststoff-Recyclingmaterial, umfassend: zumindest eine zum Erwärmen und Spülen des Kunststoff-Recyclingmaterials ausgebildete Spülkammer (102) mit einer Spüllufteinspeisung (110) zum Einspeisen von erwärmter Spülluft in die zumindest eine Spülkammer (1 02); und zumindest eine zum Kühlen des Kunststoff-Recyclingmaterials ausgebildete Kühlkammer (104) mit einer Kühllufteinspeisung (112) zum Einspeisen von Kühlluft in die zumindest eine Kühlkammer (104), wobei die zumindest eine Kühlkammer (104) der zumindest einen Spülkammer (102) nachgeschalten ist und über eine Abluftleitung (142) mit der Spüllufteinspeisung (110) derart fluidverbunden ist, dass die in der zumindest einen Kühlkammer (104) durch das Kunststoff-Recyclingmaterial erwärmte Abluft in die Spüllufteinspeisung (110) der zumindest einen Spülkammer (102) einspeisbar ist, sowie Verwendung einer solchen Aufbereitungsanlage (100) und Verfahren zum Aufbereiten von Kunststoff-Recyclingmaterial.

## Beschreibung

Die Erfindung betrifft eine Aufbereitungsanlage und eine Verwendung einer Aufbereitungsanlage zum Aufbereiten, insbesondere Spülen, von Kunststoff-Recyclingmaterial. Außerdem betrifft die Erfindung ein Verfahren zum Aufbereiten, insbesondere Spülen, von Kunststoff-Recyclingmaterial.

Kunststoff-Recyclingmaterial, wie beispielsweise aus Einwegverpackungen oder PET-Einwegflaschen gewonnene Post-Consumer-Rezyklate (PCR), stellt eine wichtige Rohstoffquelle dar. Üblicherweise wird der Verpackungsmüll sortiert, gereinigt, zerkleinert und mit einer Extrusions- und Granulieranlage in Granulat verarbeitet, das wertvolles und hochwertiges Ausgangsmaterial (das PCR) für neue Produkte darstellt.

Das Kunststoff-Recyclingmaterial kann jedoch flüchtige Bestandteile, insbesondere Monomere, Feuchtigkeit, Gase, wie Luft, Lösungsmittel, Gerüche und Aromen, wie beispielsweise Limonene, oder andere flüchtige organische Verbindungen (Volatile Organic Content, VOC) aufweisen. Limonene sind zitrusähnliche Aromen, welche beispielsweise durch Kosmetik- oder Hygieneartikel in das Verpackungsmaterial eingebracht worden sein können. Weiterhin können unerwünschte Aromen durch die verpackten Lebensmittel und deren Verwesungsprozesse entstehen. Oftmals ist der Anteil von unerwünschten Geruchsstoffen bzw. Aromen auch nach der Extrusion und Granulierung immer noch sehr hoch. Ein nachgeschalteter Prozess ist daher erforderlich, um die restlichen unerwünschten, flüchtigen Bestandteile zumindest nahezu zu entfernen. Üblicherweise muss das zu behandelnde Material erwärmt werden, um die Diffusion der VOCs zu ermöglichen. Die diffundierten VOCs müssen dann durch ein Spülfluid abtransportiert werden, zum Beispiel mit Hilfe von Wasser oder Inertgas. Anschließend muss das zu behandelnde Material wieder gekühlt werden. Dieser hochenergetische Gesamtprozess geschieht mit getrennten Aufwärmbehälter, Entgasungssilo und nachgeschaltetem Kühlbehälter.

Beispielsweise offenbart die DE 10 2012 206 017 A1 eine Mischeinrichtung mittels der Schüttgut durchmischt und gespült werden kann. Beim Spülen des Schüttguts wird dieses mit einem Gas umspült, um die flüchtigen Bestandteile zu entfernen.

Der Erfindung liegt die Aufgabe zugrunde, eine eingangs genannte Aufbereitungsanlage strukturell und funktionell zu verbessern. Außerdem liegt der Erfindung die Aufgabe zugrunde, ein eingangs genanntes Verfahren zum Aufbereiten von Kunststoff-Recyclingmaterial strukturell oder funktionell zu verbessern.

Es ist daher eine Aufgabe der vorliegenden Erfindung, eine energieoptimierte Aufbereitungsanlage aus möglichst wenig Bauteilen und kurzen Leitungswegen bereitzustellen, die die Entfernung von unterwünschten, flüchtigen Bestandteileilen, wie VOCs, in ausreichendem Maße ermöglicht.

Die Aufgabe wird gelöst mit einer Aufbereitungsanlage mit den Merkmalen des Anspruchs 1. bzw. mit einer Verwendung einer Aufbereitungsanlage mit den Merkmalen des Anspruchs 16. Ferner wird die Aufgabe gelöst mit einem Verfahren mit den Merkmalen des Anspruchs 17. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie kombiniert sein. Ebenso können nachfolgend beschriebene Vorrichtungs- und Verfahrensmerkmale miteinander kombiniert werden.

Ein Aspekt betrifft eine Aufbereitungsanlage zum Aufbereiten von Kunststoff-Recyclingmaterial. Das Aufbereiten kann ein Spülen, Desodorieren und/oder Entgasen sein oder umfassen. Die Aufbereitungsanlage kann auch eine Spülanlage, eine Desodorierungsanlage oder eine Entgasungs- und Desodorierungsanlage sein.

Das Kunststoff-Recyclingmaterial kann Post-Consumer-Rezyklat und/oder Kunststoffabfall, wie Endverbraucher-Kunststoffabfall ("post consumer waste"), sein oder umfassen. Das Kunststoff-Recyclingmaterial liegt vorzugweise als Kunststoffpartikel vor, die gewaschen und/oder gereinigt sein können. Die Kunststoffpartikel können je nach Partikelgröße und/oder Partikelform beispielsweise als Kunststoffgranulat, Kunststoffflocken oder Kunststoffpulver vorliegen. Insbesondere bildet das Kunststoff-Recyclingmaterial bzw. die Kunststoffpartikel Schüttgut, das mittels einer Extrusions- und Granulieranlage verarbeitet bzw. hergestellt worden ist. Das Kunststoff-Recyclingmaterial kann auch geschreddert worden sein.

Die Aufbereitungsanlage weist zumindest eine Spülkammer zum Erwärmen und Spülen des Kunststoff-Recyclingmaterials auf. Die Spülkammer kann zum Spülen und Entgasen des Kunststoff-Recyclingmaterials ausgebildet sein. Das Spülen kann ein Desodorieren sein. Ferner ist eine Spüllufteinspeisung zum Einspeisen von erwärmter Spülluft in die Spülkammer vorgesehen. Die Spülluft kann Umgebungsluft sein.

Des Weiteren weist die Aufbereitungsanlage zumindest eine Kühlkammer zum Kühlen des Kunststoff-Recyclingmaterialsauf. Die Kühlkammer ist mit einer Kühllufteinspeisung zum Einspeisen von, beispielsweise gekühlter oder kalter, Kühlluft in die Kühlkammer verbunden. Dabei kann die Kühlluft eine Temperatur aufweisen, die der Umgebungsluft entspricht oder die kleiner ist als die Spülluft. Beispielsweise kann die Kühlluft Umgebungsluft sein. Sind niedrigere Temperaturen erforderlich kann die Kühlluft aktiv gekühlt sein, beispielsweise über einen Wärmetauscher.

Die Kühlkammer ist der Spülkammer nachgeschalt, also in Schüttgutförderrichtung hinter der Spülkammer angeordnet. Dabei können die Spülkammer und die Kühlkammer in Reihe hintereinander angeordnet und/oder geschalten sein. Erfindungsgemäß wurde erkannt, dass es energietechnisch von Vorteil ist, die Kühlkammer über eine Abluftleitung mit der Spüllufteinspeisung zu verbinden. Dadurch ist die Kühlkammer und die Spüllufteinspeisung derart fluidverbunden, dass die in der Kühlkammer durch das Kunststoff-Recyclingmaterial erwärmte Abluft in die Spüllufteinspeisung der Spülkammer einspeisbar ist.

Vorzugsweise kann die Spülkammer ein Spülbehälter und die Kühlkammer ein Kühlbehälter sein. In einer Ausführungsvariante können Spülkammer und Kühlkammer in einem gemeinsamen Behälter intergiert sein. Dadurch wird die Behälterzahl weiter reduziert. Der Spülbehälter und der Kühlbehälter können jeweils einen Materialeinlass, z.B. eine Materialeinlassöffnung, und jeweils einen Materialauslass, z.B. eine Materialauslassöffnung, aufweisen. Ferner können die Behälter miteinander in Schüttgut-Förderverbindung stehen, beispielsweise mittels einer Materialförderleitung. Über eine solche Materialförderleitung kann der Materialauslass des Spülbehälters mit dem Materialeinlass des Kühlbehälters verbunden sein. Die Behälter können beispielsweise zylinderförmig, ausgebildet sein. Dabei können die Behälter einen im Wesentlichen runden, wie kreisrunden, ovalen, oder eckigen Querschnitt aufweisen. Die Behälter können im Wesentlichen den gleichen Querschnitt aufweisen. In einer Ausführungsvariante kann der Spülbehälter einen größeren Querschnitt aufweisen als der Kühlbehälter. Der Spülbehälter und der Kühlbehälter können im Wesentlichen die gleiche Höhe, z.B. zylindrische Höhe, aufweisen. Alternativ kann der Spülbehälter eine größere Höhe aufweisen als der Kühlbehälter. Als Behälter dienen insbesondere Behälter mit einem Aufnahmevolumen zwischen 5 bis 1000 m³.

Die Behälter können einen zylinderförmigen Teil und einen sich verjüngenden Teil, z.B. in Form eines Kegels, aufweisen. Der sich verjüngende Teil kann sich an den zylinderförmigen Teil direkt anschließen. Dabei kann der sich verjüngende Teil, in Materialflussrichtung gesehen, nach dem zylinderförmigen Teil vorgesehen sein. Vorzugsweise ist der zylinderförmige Teil kreiszylinderförmig. Der Materialeinlass kann am zylinderförmigen Teil und der Materialauslass kann am sich verjüngende Teil vorgesehen sein. Bei einer Ausführungsvariante verjüngt sich der untere Teil des Behälters hin zum Materialauslass.

Die Aufbereitungsanlage kann zum kontinuierlichen oder diskontinuierlichen Betrieb ausgebildet sein, beispielsweise zum kontinuierlichen oder diskontinuierlichen Befüllen des Spülbehälters und/oder des Kühlbehälters. Zusätzlich oder alternativ kann die Aufbereitungsanlage zum kontinuierlichen oder diskontinuierlichen Abgeben bzw. Abführen des Kunststoff-Recyclingmaterials ausgebildet sein. Besonders vorteilhaft ist, dass die Aufbereitungsanlage im kontinuierlichen Betrieb äußert energieeffizient betrieben werden kann.

Zwischen dem Spülbehälter und dem Kühlbehälter kann eine erste Dosiervorrichtung wirksam angeordnet sein. Die erste Dosiervorrichtung ist vorzugweise in die den Spülbehälter und Kühlbehälter verbindende Materialförderleitung integriert. Die erste Dosiervorrichtung kann zum Einspeisen des in dem Spülbehälter gespülten Kunststoff-Recyclingmaterials in den Kühlbehälter ausgebildet sein. Beispielsweise kann die erste Dosiervorrichtung eine Schleuse, insbesondere Zellenradschleuse, ein Schieber, eine Klappe oder eine Schnecke sein oder umfassen. Vorzugsweise dient die erste Dosiervorrichtung zum kontinuierlichen Aufnehmen und/oder kontinuierlichen Abgeben bzw. Einspeisen des in dem Spülbehälter gespülten Kunststoff-Recyclingmaterials. In einer Ausführungsvariante kann die erste Dosiervorrichtung ausgebildet sein, die Materialabgabe bzw. Einspeisung in den Kühlbehälter basierend auf einem Füllstand des Spülbehälters und/oder basierend auf einer Menge an im Spülbehälter vorhandenem Kunststoff-Recyclingmaterial zu steuern. Hierzu kann eine Sensorik vorgesehen sein, die eingerichtet ist, den Füllstand des Spülbehälters und/oder die Menge an im Spülbehälter vorhandenem Kunststoff-Recyclingmaterial zu erfassen. Der Füllstand bzw. die Materialmenge im Spülbehälter kann so geregelt und auf einer bestimmten Höhe bzw. Wert, beispielsweise konstant, gehalten werden. Dabei kann die Aufbereitungsanlage und/oder die erste Dosiervorrichtung ausgebildet sein, einen kontinuierlichen Materialfluss von Kunststoff-Recyclingmaterial durch den Spülbehälter hindurch zu bewirken. Die erste Dosiervorrichtung kann hier je nach Behandlungsdauer und/oder erforderlichen Durchsatz gesteuert sein.

Die Aufbereitungsanlage kann ferner eine zweite Dosiervorrichtung aufweisen, die dem zumindest einen Kühlbehälter nachgeschaltet ist. Dabei kann die zweite Dosiervorrichtung in eine an den Materialauslass des Kühlbehälters angeschlossene Materialförderleitung integriert sein. Die zweite Dosiervorrichtung kann zum Abführen des in dem Kühlbehälter gekühlten Kunststoff-Recyclingmaterials ausgebildet sein. Vorzugsweise dient die zweite Dosiervorrichtung zum kontinuierlichen Aufnehmen und/oder kontinuierlichen Abgeben bzw. Abführen des in dem zumindest einen Kühlbehälter gekühlten Kunststoff-Recyclingmaterials. Die zweite Dosiervorrichtung kann wie die vorstehend und/oder nachfolgend beschriebene erste Dosiervorrichtung ausgebildet sein. In einer Ausführungsvariante kann die zweite Dosiervorrichtung ausgebildet sein, die Materialabgabe bzw. Abführung basierend auf einem Füllstand des zumindest einen Kühlbehälters und/oder einer Menge an im zumindest einen Kühlbehälter vorhandenem Kunststoff-Recyclingmaterial zu steuern. Hierzu kann eine Sensorik vorgesehen sein, die eingerichtet ist, den Füllstand des zumindest einen Kühlbehälters und/oder die Menge an im zumindest einen Kühlbehälters vorhandenem Kunststoff-Recyclingmaterial zu erfassen. Der Füllstand bzw. die Materialmenge im zumindest einen Kühlbehälters kann so ebenfalls geregelt und auf einer bestimmten Höhe bzw. Wert, beispielsweise konstant, gehalten werden. Dabei kann die Aufbereitungsanlage und/oder die zweite Dosiervorrichtung ausgebildet sein, einen kontinuierlichen Materialfluss von Kunststoff-Recyclingmaterial durch den zumindest einen Kühlbehälter hindurch zu bewirken.

Die Spüllufteinspeisung kann zumindest eine Spülluftleitung umfassen, die in die Spülkammer mündet. Es können ein oder mehrere Einspeisstellen vorgesehen sein, an der bzw. denen die Spülluftleitung in die Spülkammer mündet. Beispielsweise kann die Spülluftleitung an zwei, drei oder mehr Einspeisstellen in die Spülkammer münden. Die Einspeisstellen können voneinander vertikal beabstandet angeordnet sein. Dadurch wird eine Zuführung von Spülluft an verschiedenen Höhenniveaus der Spülkammer ermöglicht. Zusätzlich oder alternativ kann eine gleichmäßige Verteilung der Spülluft entlang des Umfangs an der Spülkammer dadurch erreicht werden, dass die Einspeisstellen in einer horizontalen Ebene beabstandet zueinander angeordnet sind. Die Einspeisstellen können Einblasstellen oder Luftanschlüsse sein. Besonders vorteilhaft ist die Anordnung der Einspeisstellen im Bereich des sich verjüngenden Teils der Spülkammer. In einer Ausführungsvariante kann auch zumindest eine Einspeisstelle an der am Materialauslass der Spülkammer angeschlossenen Materialförderleitung vorgesehen sein. Dadurch kann die Spülluftleitung in die Materialförderleitung münden und so Spülluft von unten in die Spülkammer eingeblasen werden. Die Spülluftleitung kann mehrteilig ausgebildet sein, beispielsweise mehrere Teilleitungsabschnitte aufweisen. Dabei kann die Spülluftleitung zumindest eine Verzweigung aufweisen, beispielsweise eine T- oder Y-Verzweigung. Besonders vorteilhaft ist eine im Wesentlichen gleichmäßig über den Querschnitt verteilte Durchströmung der Spülkammer mit Spülluft von unten nach oben, wobei die Spülluft das in der Spülkammer vorhandene Kunststoff-Recyclingmaterial durchströmt. Vorzugsweise kann das Spülen mit Spülluft im Gegenstromverfahren erfolgen. Wesentlich ist auch, dass die Spülluftleitung von dem Kunststoffgranulat freigehalten wird. Dazu kann an den Einspeisstellen ein Rückhaltelement, wie ein Hutsieb oder ein Lochblech, angeordnet sein, damit das Kunststoffgranulat aus der Spülkammer nicht in die Spülluftleitung gelangen kann. Eine Verstopfung der Spülluftleitung kann so verhindert werden.

Die Aufbereitungsanlage kann eine Heizeinrichtung zur Temperierung, beispielsweise Erwärmung, der Spülluft aufweisen. Vorzugsweise ist die Spülluftleitung mit der Heizeinrichtung wirksam gekoppelt. Dabei kann die Spülluftleitung durch die Heizeinrichtung hindurch verlaufen oder die Spülluftleitung kann zumindest abschnittsweise von der Heizeinrichtung umgeben sein. Die Heizeinrichtung kann elektrisch oder nichtelektrisch betrieben sein. Die Heizeinrichtung kann zumindest eine Heizwendel oder zumindest einen Heizkanal, beispielsweise für ein Heizmedium, aufweisen. Als Heizmedium sind Thermoöl, Wasserdampf, Heißwasser oder Rauchgas, z.B. aus Abluft vorhandener Nebenanlagen, einsetzbar. Die Heizeinrichtung kann beispielsweise als Gasdurchlauferhitzer oder Lufterhitzer ausgeführt sein.

Die Kühllufteinspeisung kann zumindest eine Kühlluftleitung umfassen, die in die Kühlkammer mündet. Es können ein oder mehrere Einspeisstellen vorgesehen sein, an der bzw. denen die Kühlluftleitung in die Kühlkammer mündet. Beispielsweise kann die Kühlluftleitung an zwei, drei oder mehr Einspeisstellen in die Kühlkammer münden. Die Einspeisstellen der Kühlkammer können in gleicher Weise wie die vorstehend und/oder nachfolgend beschriebenen Einspeisstellen der Spülkammer ausgeführt sein. Die Einspeisstellen können somit voneinander vertikal und/oder horizontal beabstandet angeordnet sein. Dabei können sie radial und in der Höhe versetzt sein. Weiterhin können eine oder mehrere Ringleitungen mit jeweils zumindest einer Einspeisstelle, z.B. in Form eines Stutzens, gebildet sein. Besonders vorteilhaft ist auch hier die Anordnung der Einspeisstellen im Bereich des sich verjüngenden Teils der Kühlkammer. In einer bevorzugten Ausführungsvariante kann auch zumindest eine Einspeisstelle an der am Materialauslass der Kühlkammer angeschlossenen Materialförderleitung vorgesehen sein. Dadurch kann die Kühlluftleitung in die Materialförderleitung münden und so Kühlluft von unten in die Kühlkammer eingeblasen werden. Die Kühlluftleitung kann wie die vorstehend und/oder nachfolgend beschriebene Spülluftleitung ausgebildet sein. Besonders vorteilhaft ist auch hier eine im Wesentlichen gleichmäßig über den Querschnitt verteilte Durchströmung der Kühlkammer mit Kühlluft von unten nach oben, sodass das in der Kühlkammer vorhandene Kunststoff-Recyclingmaterial von unten nach oben mit Kühlluft durchströmt wird. Vorzugsweise kann das Kühlen mit Kühlluft im Gegenstromverfahren erfolgen. Ein Rückhalteelement zum Verhindern das Kunststoffgranulat in die Kühlluftleitung gelangt kann auch hier an den Einspeisstellen vorgesehen sein.

Zur Temperierung der Kühlluft kann die Aufbereitungsanlage eine Kühleinrichtung aufweisen. Dadurch kann eine aktive Kühlung der Kühlluft erfolgen. Die Kühlluftleitung kann mit der Kühleinrichtung wirksam gekoppelt sein. Beispielsweise kann die Kühlluftleitung durch die Kühleinrichtung hindurch verlaufen oder die Kühlluftleitung kann zumindest abschnittsweise von der Kühleinrichtung umgeben sein. Die Kühleinrichtung kann elektrisch oder nichtelektrisch betrieben sein. Beispielsweise kann die Kühleinrichtung zumindest einen Kühlkanal für eine Kühlmedium aufweisen.

Die Spüllufteinspeisung kann ein erstes Gebläse zum Zuführen von Spülluft umfassen. Die Kühllufteinspeisung kann ein zweites Gebläse zum Zuführen von Kühlluft umfassen. Das erste und/oder das zweite Gebläse kann/können als Druckgebläse ausgebildet sein. In einer Ausführungsvariante kann das erste Gebläse als Saug-Druckgebläse ausgebildet sein, wodurch das zweite Gebläse dann entfallen kann. Das erste Gebläse kann zur Temperierung, beispielsweise Erwärmung, der Spülluft ausgebildet sein. Beispielsweise kann das erste Gebläse dazu ausgebildet sein, die Spülluft mittels Kompressionswärme zu Erwärmen. Das zweite Gebläse kann zur Temperierung, beispielsweise Kühlung, der Kühlluft ausgebildet sein. Die Spülluftleitung kann mit dem ersten Gebläse wirksam gekoppelt sein. Dabei kann das erste Gebläse in die Spülluftleitung integriert sein. In einer bevorzugten Variante kann das erste Gebläse mit der Abluftleitung der Kühlkammer wirksam gekoppelt sein. Die Kühlluftleitung kann mit dem zweiten Gebläse wirksam gekoppelt sein. Dabei kann das zweite Gebläse in die Kühlluftleitung integriert sein. Zusätzlich oder alternativ kann in der Abluftleitung der Kühlkammer ein Sauggebläse oder ein Saug-Druckgebläse vorgesehen sein.

Die Abluftleitung der Kühlkammer kann in die Spülluftleitung münden. Zwischen der Abluftleitung der Kühlkammer und der Spülluftleitung kann ein Staubabscheider wirksam geschalten sein. Die Abluft der Kühlkammer kann somit erst in den Staubabscheider gefördert werden bevor sie in die Spülluftleitung gelangt. Beispielsweise kann die Abluftleitung der Kühlkammer eingangsseitig des ersten Gebläses in die Spülluftleitung münden. Alternativ kann die Abluftleitung der Kühlkammer auch zwischen dem ersten Gebläse und der Heizeinrichtung in die Spülluftleitung münden.

Ferner kann an der Spülkammer eine Abluftleitung zum Abführen der Spülluft inklusive der flüchtigen Bestandteile, wie VOCs, des Kunststoff-Recyclingmaterials, angeschlossen sein. In der Abluftleitung der Spülkammer kann ein Gebläse, beispielsweise ein Sauggebläse, vorgesehen sein.

Die Spüllufteinspeisung kann mit einer Dampfeinspeisung gekoppelt sein. Die Dampfeinspeisung kann zum Einspeisen von Wasserdampf in die Spülluft ausgebildet sein. Die Dampfeinspeisung kann vor oder nach der Heizeinrichtung wirksam angeordnet sein. Alternativ kann eine Wassereinspritzung zum Einspritzen von Wasser in die Spülluft vorgesehen sein. Die Wassereinspritzung kann vor der Heizeinrichtung wirksam angeordnet sein.

Es können zwei, drei, vier, fünf oder mehr Spülkammern zueinander parallel geschalten sein. Zusätzlich oder alternativ können zwei, drei, vier oder mehr Kühlkammern zueinander parallel geschalten sein. In einer Ausführungsvariante können zwei oder mehr parallel geschaltete Kühlkammern mit einer einzigen den Kühlkammern vorgeschalteten Spülkammer vorgesehen sein.

Die Aufbereitungsanlage kann mittels der Spülluft das Kunststoff-Recyclingmaterial insbesondere auf eine Temperatur von etwa 80 bis 100 °C erwärmen. Ferner kann die Aufbereitungsanlage so ausgebildet sein, dass das Kunststoff-Recyclingmaterial mit einer Verweildauer, z.B. mittleren Verweildauer, von etwa 5 bis 25 Stunden in der jeweiligen Kammer bzw. Behälter gehalten werden kann. Vorzugsweise kann die Aufbereitungsanlage derart ausgebildet sein, dass ein Durchsatz, wie Materialdurchsatz, von etwa 0,5 bis 25 Tonnen pro Stunde erreicht werden kann.

Die Aufbereitungsanlage kann zum Durchführen eines Verfahrens, z.B. des nachfolgend beschriebenen Verfahrens, zum Aufbereiten von Kunststoff-Recyclingmaterial, beispielsweise von Post-Consumer-Rezyklat, ausgebildet sein.

Ein weiterer Aspekt betrifft eine Verwendung der vorstehend und/oder nachfolgend beschriebenen Aufbereitungsanlage zum Aufbereiten, insbesondere Spülen, von Kunststoff-Recyclingmaterial, beispielsweise von Post-Consumer-Rezyklat.

Ein weiterer Aspekt betrifft ein Verfahren zum Aufbereiten von Kunststoff-Recyclingmaterial, beispielsweise von Post-Consumer-Rezyklat. Das Verfahren kann ein Kunststoffaufbereitungsverfahren, ein Spülverfahren und/oder ein Desodorierungsverfahren sein. Das Verfahren kann auch ein Entgasungs- und Desodorierungsverfahren sein. Bevorzug kann das Verfahren zum Entgasen und/oder Spülen bzw. Desodorieren von Kunststoff-Recyclingmaterial ausgebildet sein. Das Verfahren kann beispielsweise bei der wie vorstehend und/oder nachfolgend beschriebenen Aufbereitungsanlage zur Anwendung kommen und/oder mit dieser durchgeführt werden.

Zunächst kann, insbesondere zu spülendes bzw. zu desodorierendes, Kunststoff-Recyclingmaterial zumindest einer Spülkammer der Aufbereitungsanlage zu geführt werden. Das Zuführen kann kontinuierlich oder diskontinuierlich erfolgen. Unter Zuführen kann auch ein Befüllen verstanden werden.

Sodann kann das Kunststoff-Recyclingmaterial in der Spülkammer, insbesondere mittels über eine Spüllufteinspeisung in die Spülkammer eingespeiste, erwärmte Spülluft, erwärmt und gespült werden. Dabei kann das Kunststoff-Recyclingmaterial durch die Spülluft beispielsweise auf eine Temperatur von etwa 80 bis 100 °C erwärmt werden. Die Verweildauer, wie mittlere Verweildauer, des Kunststoff-Recyclingmaterials in der Spülkammer kann dabei etwa 5 bis 25 Stunden betragen.

Das in der Spülkammer gespülte und erwärmte Kunststoff-Recyclingmaterial kann dann zumindest einer Kühlkammer der Aufbereitungsanlage zugeführt werden. Das Zuführen kann kontinuierlich oder diskontinuierlich erfolgen.

Innerhalb der Kühlkammer kann das gespülte und erwärmte Kunststoff-Recyclingmaterial gekühlt werden. Dies erfolgt insbesondere mittels über eine Kühllufteinspeisung in die zumindest eine Kühlkammer eingespeiste Kühlluft. Dabei kann das gespülte und erwärmte Kunststoff-Recyclingmaterial durch die Kühlluft beispielsweise auf eine Temperatur kleiner 60 °C gekühlt werden. Unter Kühlen kann auch ein aktives Abkühlen verstanden werden. Die Verweildauer, wie mittlere Verweildauer, des gespülten und erwärmten Kunststoff-Recyclingmaterials in der zumindest einen Kühlkammer kann dabei etwa 5 bis 25 Stunden betragen.

Erfindungsgemäß kann die in der zumindest einen Kühlkammer durch das gespülte Kunststoff-Recyclingmaterial erwärmte Abluft in die Spüllufteinspeisung der Spülkammer eingespeist werden. Vor der Einspeisung kann die erwärmte Abluft entstaubt werden.

Das gekühlte Kunststoff-Recyclingmaterial kann aus der Kühlkammer abgeführt werden. Das Abführen kann kontinuierlich oder diskontinuierlich erfolgen, beispielsweise durch Einspeisung in eine Materialförderleitung.

Bei dem Verfahren kann der Durchsatz, wie Materialdurchsatz, etwa 0,5 bis 25 Tonnen pro Stunde betragen. Ferner kann die Strömungsgeschwindigkeit der Spülluft und/oder der Kühlluft etwa 0,1 bis 1 m/s betragen. Die relative Feuchte der erwärmten Spülluft kann etwa 60 bis 90 % betragen. Mit der erfindungsgemäßen Aufbereitungsanlage und dem Verfahren kann erreicht werden, dass die flüchtigen Bestandteile, wie VOCs, nach der Behandlung unter < 1 ppm betragen.

Es ergibt sich somit durch die Erfindung eine energieoptimierte Aufbereitungsanlage und/oder Aufbereitungsverfahren, insbesondere für Post-Consumer-Rezyklate (PCR), bei dem sich das Kunststoffmaterial in der Spülkammer durch Einspeisung von erwärmter Spülluft im Gegenstromverfahren mäßig bewegen oder in einer Art Schwebezustand während der Spülung gehalten werden kann, wobei die warme Abluft aus der Kühlkammer genutzt wird, um die Spülluft zu erwärmen. Dadurch bleibt die Energie zum Großteil im System.

Mit der Erfindung kann daher eine energieoptimierte Anlage aus möglichst wenig Bauteilen bereitgestellt werden, die die Entfernung von unterwünschten, flüchtigen Bestandteileilen, wie VOCs, mit ausreichendem Maße ermöglicht. Es kann ein kontinuierlicher und energieeffizienter Betrieb der Anlage erfolgen, beim dem die eingebrachte Wärmeenergie genutzt wird. Dadurch kann eine signifikante Energieeinsparung von ca. 80% kann erreicht werden.

Nachfolgend werden Ausführungsbeispiele der Erfindung unter Bezugnahme auf Figuren näher beschrieben, dabei zeigen schematisch und beispielhaft:

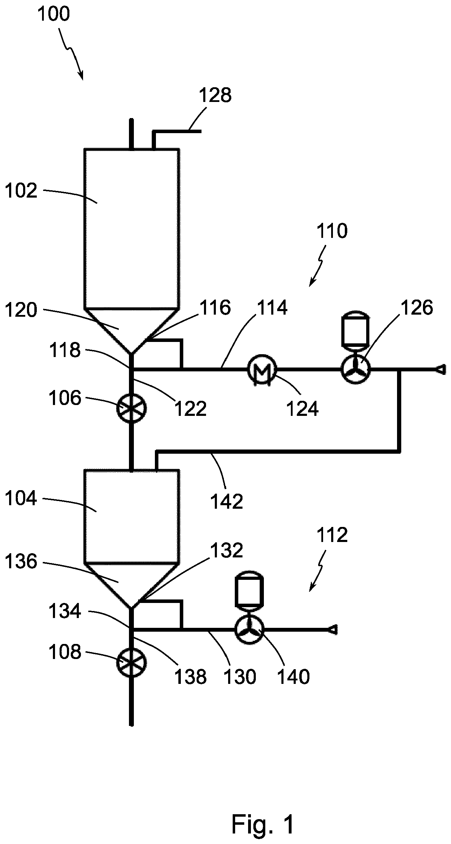

- Fig. 1: eine Aufbereitungsanlage zum Aufbereiten von Kunststoff-Recyclingmaterial.

Fig. 1 zeigt schematisch eine Ausführungsvariante einer Aufbereitungsanlage 100 zum Aufbereiten von Kunststoff-Recyclingmaterial, insbesondere von Post-Consumer-Rezyklat. Die Aufbereitungsanlage 100 ist zum kontinuierlichen Betrieb ausgebildet und umfasst einen als Spülkammer ausgebildeten Spülbehälter 102 und einen als Kühlkammer ausgebildeten Kühlbehälter 104. Der Spülbehälter 102 ist zum Erwärmen und Spülen bzw. Desodorieren des Kunststoff-Recyclingmaterials ausgebildet. Der Kühlbehälter 104 ist zum Kühlen des Kunststoff-Recyclingmaterials ausgebildet.

Der Kühlbehälter 104 ist dem Spülbehälter 102 nachgeschalten, wobei zwischen dem Spülbehälter 102 und dem Kühlbehälter 104 eine erste Dosiervorrichtung 106 zum Zuführen des in dem Spülbehälter 102 gespülten Kunststoff-Recyclingmaterials zu dem Kühlbehälter 104 wirksam angeordnet ist. Die erste Dosiervorrichtung 106 ist im vorliegendem Ausführungsbeispiel als Zellenradschleuse zum kontinuierlichen Einspeisen des gespülten Kunststoff-Recyclingmaterials in den Kühlbehälter 104 ausgebildet. Insbesondere kann die Zellenradschleuse 106 das gespülte Kunststoff-Recyclingmaterial basierend auf einem Füllstand des Spülbehälters 102 aufnehmen und an den Kühlbehälter 104 abgeben. Dadurch kann der Kühlbehälter 104 kontinuierlich mit dem gespülten Kunststoff-Recyclingmaterial befüllt werden.

Die Aufbereitungsanlage 100 weist ferner eine zweite Dosiervorrichtung 108 auf, die dem Kühlbehälter 104 nachgeschalten und zum Abführen des im Kühlbehälter 104 gekühlten Kunststoff-Recyclingmaterials ausgebildet ist. Die zweite Dosiervorrichtung 108 ist im vorliegendem Ausführungsbeispiel ebenfalls als Zellenradschleuse zum kontinuierlichen Abgeben des gekühlten Kunststoff-Recyclingmaterials ausgebildet. Insbesondere kann die Zellenradschleuse 108 das gekühlte und gespülte Kunststoff-Recyclingmaterial basierend auf einem Füllstand des Kühlbehälters 104 aufnehmen und abgeben. Dadurch kann eine kontinuierliche Abgabe mit dem gekühlten und gespülten Kunststoff-Recyclingmaterial erfolgen, beispielsweise an einen Auffangbehälter oder eingespeist in eine Materialförderleitung zum Abtransport zu einer Weiterverarbeitungsanlage.

Zusätzlich weist die Aufbereitungsanlage 100 eine Spüllufteinspeisung 110 zum Einspeisen von erwärmter Spülluft in den Spülbehälter 102 und eine Kühllufteinspeisung 112 zum Einspeisen von Kühlluft in den Kühlbehälter 104 auf.

Die Spüllufteinspeisung 110 umfasst eine Spülluftleitung 114, die an zwei Einspeisstellen 116, 118 unten in den Spülbehälter 102 mündet. Die erste Einspeisstelle 116 befindet sich unten an einem sich verjüngenden Teil 120 des zylinderförmigen Spülbehälters 102 und die zweite Einspeisstelle 118 befindet sich an einer Materialförderleitung 122, die vom Spülbehälter 102 zur ersten Dosiervorrichtung 106 führt. Dadurch kann die erwärmte Spülluft unten am Spülbehälter 102 eingeblasen werden und im Gegenstromverfahren das zu spülende Kunststoff-Recyclingmaterial durchspülen.

Die Spüllufteinspeisung 110 umfasst ferner eine Heizeinrichtung 124, die zur Temperierung, insbesondere Erwärmung, der Spülluft mit der Spülluftleitung 114 wirksam gekoppelt ist. Ferner weist die Spüllufteinspeisung 110 ein erstes Gebläse 126 zum Zuführen von Spülluft auf, das mit der Spülluftleitung 114 so gekoppelt, ist, dass Spülluft in die Spülluftleitung 114 eingeblasen werden kann. Das erste Gebläse 126 ist im vorliegendem Ausführungsbeispiel als Druckgebläse ausgebildet. Alternativ kann das erste Gebläse 126 als Saug-Druckgebläse ausgebildet sein. Um die in den Spülbehälter 102 eingebrachte Spülluft zusammen mit den flüchtigen Bestandteilen, wie z.B. VOCs, des gespülten Kunststoff-Recyclingmaterials nach oben aus dem Spülbehälter 102 entweichen zu lassen, ist oben an dem Spülbehälter 102 eine Abluftleitung 128 zum Abführen der Spülluft zusammen mit den flüchtigen Bestandteilen angeschlossen.

Die Kühllufteinspeisung 112 umfasst eine Kühlluftleitung 130, die an zwei Einspeisstellen 132, 134 unten in den Kühlbehälter 104 mündet. Die erste Einspeisstelle 132 befindet sich unten an einem sich verjüngenden Teil 136 des zylinderförmigen Kühlbehälters 104 und die zweite Einspeisstelle 134 befindet sich an einer Materialförderleitung 138, die vom Kühlbehälter 104 zur zweiten Dosiervorrichtung 108 führt. Dadurch kann die Kühlluft unten am Kühlbehälter 104 eingeblasen werden und im Gegenstromverfahren das zu kühlende gespülte Kunststoff-Recyclingmaterial durchspülen.

Die Kühllufteinspeisung 112 umfasst ferner ein zweites Gebläse 140 zum Zuführen von Kühlluft, das mit der Kühlluftleitung 130 so gekoppelt, ist, dass Kühlluft in die Kühlluftleitung 130 eingeblasen werden kann. Die Kühlluft kann beispielsweise angesaugte Umgebungsluft sein. Das zweite Gebläse 126 ist im vorliegendem Ausführungsbeispiel als Druckgebläse ausgebildet.

Um die in den Kühlbehälter 104 eingebrachte und durch das gespülte Kunststoff-Recyclingmaterial erwärmte Kühlluft bzw. Abluft nach oben aus dem Kühlbehälter 104 entweichen zu lassen, ist oben an dem Kühlbehälter 104 eine Abluftleitung 142 zum Abführen der erwärmten Kühlabluft angeschlossen. Der Kühlbehälter 104 ist über die Abluftleitung 142 mit der Spüllufteinspeisung 114 derart fluidverbunden, dass die in dem Kühlbehälter 104 durch das gespülte Kunststoff-Recyclingmaterial erwärmte Kühlabluft in die Spüllufteinspeisung 110 einspeisbar ist. Wie in Fig. 1 dargestellt, mündet die Abluftleitung 142 des Kühlbehälters 104 eingangsseitig des ersten Gebläses 126 in die Spülluftleitung 114. Dadurch kann die erwärmte Abluft aus dem Kühlbehälter 104 mit der Spülluft vermischt und genutzt werden, um das zu spülende Kunststoff-Recyclingmaterial im Spülbehälter 102 zu erwärmen und zu spülen. Durch eine solche Verschaltung bzw. Rückführung der erwärmten Abluft kann die Wärmenergie Großteils im System bleiben und genutzt werden. Die Aufbereitungsanlage 100 kann damit wesentlich energieeffizienter betrieben werden.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Aufbereitungsanlage
- 102: Spülbehälter/Spülkammer
- 104: Kühlbehälter/Kühlkammer
- 106: erste Dosiervorrichtung / Zellenradschleuse
- 108: zweite Dosiervorrichtung / Zellenradschleuse
- 110: Spüllufteinspeisung
- 112: Kühllufteinspeisung
- 114: Spülluftleitung
- 116: Einspeisstelle
- 118: Einspeisstelle
- 120: sich verjüngende Teil
- 122: Materialförderleitung
- 124: Heizeinrichtung
- 126: erstes Gebläse / Druckgebläse
- 128: Abluftleitung
- 130: Kühlluftleitung
- 132: Einspeisstelle
- 134: Einspeisstelle
- 136: sich verjüngende Teil
- 138: Materialförderleitung
- 140: zweites Gebläse / Druckgebläse
- 142: Abluftleitung

## Patentansprüche

1. Aufbereitungsanlage (100) zum Aufbereiten von Kunststoff-Recyclingmaterial, umfassend:
- zumindest eine zum Erwärmen und Spülen des Kunststoff-Recyclingmaterials ausgebildete Spülkammer (102) mit einer Spüllufteinspeisung (110) zum Einspeisen von erwärmter Spülluft in die zumindest eine Spülkammer (102); und
- zumindest eine zum Kühlen des Kunststoff-Recyclingmaterials ausgebildete Kühlkammer (104) mit einer Kühllufteinspeisung (112) zum Einspeisen von Kühlluft in die zumindest eine Kühlkammer (104), wobei die zumindest eine Kühlkammer (104) der zumindest einen Spülkammer (102) nachgeschalten ist und über eine Abluftleitung (142) mit der Spüllufteinspeisung (110) derart fluidverbunden ist, dass die in der zumindest einen Kühlkammer (104) durch das Kunststoff-Recyclingmaterial erwärmte Abluft in die Spüllufteinspeisung (110) der zumindest einen Spülkammer (102) einspeisbar ist.

2. Aufbereitungsanlage (100) nach Anspruch 1, **dadurch gekennzeichnet, dass** die Aufbereitungsanlage (100) zum kontinuierlichen Betrieb ausgebildet ist.

3. Aufbereitungsanlage (100) nach wenigstens einem der vorhergehenden Ansprüche, **dadurch gekennzeichnet, dass** die zumindest eine Spülkammer (102) ein Spülbehälter (102) und die zumindest eine Kühlkammer (104) ein Kühlbehälter (104) ist.

4. Aufbereitungsanlage (100) nach Anspruch 3, **dadurch gekennzeichnet, dass** zwischen dem zumindest einen Spülbehälter (102) und dem zumindest einen Kühlbehälter (104) eine erste Dosiervorrichtung (106) zum kontinuierlichen Einspeisen des in dem zumindest einen Spülbehälter (102) gespülten Kunststoff-Recyclingmaterials in den zumindest einen Kühlbehälter (104) wirksam ist.

5. Aufbereitungsanlage (100) nach Anspruch 4, **dadurch gekennzeichnet, dass** die erste Dosiervorrichtung (106) ausgebildet ist, die Einspeisung in den zumindest einen Kühlbehälter (104) basierend auf einem Füllstand des zumindest einen Spülbehälters (102) und/oder basierend auf einer Menge an im zumindest einen Spülbehälter (102) vorhandenem Kunststoff-Recyclingmaterial zu steuern.

6. Aufbereitungsanlage (100) nach wenigstens einem der vorhergehenden Ansprüche 3 bis 5, **dadurch gekennzeichnet, dass** eine zweite Dosiervorrichtung (108) vorgesehen ist, die dem zumindest einen Kühlbehälter (104) nachgeschalten ist und zum kontinuierlichen Abführen des in dem zumindest einen Kühlbehälter (104) gekühlten Kunststoff-Recyclingmaterials ausgebildet ist.

7. Aufbereitungsanlage (100) nach Anspruch 6, **dadurch gekennzeichnet, dass** die zweite Dosiervorrichtung (108) ausgebildet ist, das Abführen des gekühlten Kunststoff-Recyclingmaterials basierend auf einem Füllstand des zumindest einen Kühlbehälters (104) und/oder basierend einer Menge an im zumindest einen Kühlbehälter (104) vorhandenem Kunststoff-Recyclingmaterial zu steuern.

8. Aufbereitungsanlage (100) nach wenigstens einem der vorhergehenden Ansprüche, **dadurch gekennzeichnet, dass** die Spüllufteinspeisung (110) eine Spülluftleitung (114) umfasst, die mit einer Heizeinrichtung (124) zur Temperierung der Spülluft wirksam gekoppelt ist.

9. Aufbereitungsanlage (100) nach wenigstens einem der vorhergehenden Ansprüche, **dadurch gekennzeichnet, dass** die Spüllufteinspeisung (110) ein erstes Gebläse (126) zum Zuführen von Spülluft umfasst, und/oder dass die Kühllufteinspeisung (112) ein zweites Gebläse (140) zum Zuführen von Kühlluft umfasst.

10. Aufbereitungsanlage (100) nach Anspruch 9, **dadurch gekennzeichnet, dass** das erste Gebläse (126) und/oder das zweite Gebläse (140) als Druckgebläse ausgebildet ist, und/oder dass das erste Gebläse (126) als Saug-Druckgebläse ausgebildet ist.

11. Aufbereitungsanlage (100) nach wenigstens einem der vorhergehenden Ansprüche 8 bis 10, **dadurch gekennzeichnet, dass** die Abluftleitung (142) der zumindest einen Kühlkammer (104), insbesondere eingangsseitig des ersten Gebläses (126) oder zwischen dem ersten Gebläse (126) und der Heizeinrichtung (124), in die Spülluftleitung (114) mündet.

12. Aufbereitungsanlage (100) nach wenigstens einem der vorhergehenden Ansprüche, **dadurch gekennzeichnet, dass** in der Abluftleitung (142) der zumindest einen Kühlkammer (104) ein Sauggebläse oder ein Saug-Druckgebläse vorgesehen ist.

13. Aufbereitungsanlage (100) nach wenigstens einem der vorhergehenden Ansprüche, **dadurch gekennzeichnet, dass** an der zumindest einen Spülkammer (102) eine Abluftleitung (128) zum Abführen der Spülluft und der flüchtigen Bestandteile, wie VOCs, des Kunststoff-Recyclingmaterials, angeschlossen ist, wobei in der Abluftleitung (128) der zumindest einen Spülkammer (102) ein Sauggebläse vorgesehen ist.

14. Aufbereitungsanlage (100) nach wenigstens einem der vorhergehenden Ansprüche, **dadurch gekennzeichnet, dass** die Spüllufteinspeisung (110) mit einer Dampfeinspeisung zum Einspeisen von Wasserdampf oder einer Wassereinspritzung zum Einspritzen von Wasser in die Spülluft gekoppelt ist.

15. Aufbereitungsanlage (100) nach wenigstens einem der vorhergehenden Ansprüche, **dadurch gekennzeichnet, dass** mehrere Spülkammern (102) zueinander parallel geschalten sind, und/oder dass mehrere Kühlkammern (104) zueinander parallel geschalten sind.

16. Verwendung einer Aufbereitungsanlage (100) nach wenigstens einem der vorhergehenden Ansprüche zum Aufbereiten, insbesondere Spülen, von Kunststoff-Recyclingmaterial, insbesondere von Post-Consumer-Rezyklat.

17. Verfahren zum Aufbereiten von Kunststoff-Recyclingmaterial, insbesondere in einer Aufbereitungsanlage (100) nach wenigstens einem der vorhergehenden Ansprüche 1 bis 15, umfassend folgende Schritte:
- Erwärmen und Spülen des Kunststoff-Recyclingmaterials in zumindest einer Spülkammer (102) mittels über eine Spüllufteinspeisung (110) in die zumindest eine Spülkammer (102) eingespeiste, erwärmte Spülluft;
- Zuführen, insbesondere kontinuierliches Zuführen, des in der zumindest einen Spülkammer (102) gespülten Kunststoff-Recyclingmaterials zu zumindest einer Kühlkammer (104);
- Kühlen des Kunststoff-Recyclingmaterials innerhalb der Kühlkammer (104) mittels über eine Kühllufteinspeisung (112) in die zumindest eine Kühlkammer (104) eingespeiste Kühlluft; und
- Einspeisen der in der zumindest einen Kühlkammer (104) durch das Kunststoff-Recyclingmaterial erwärmten Abluft in die Spüllufteinspeisung (110) der zumindest einen Spülkammer (102).
